# EUROPÄISCHE PATENTANMELDUNG

(11) **EP 1 371 941 A2**
(43) Veröffentlichungstag der Anmeldung: **17.12.2003**
(21) Anmeldenummer: 03012978.7
(22) Anmeldetag: 07.06.2003
(51) Int. Cl.: G01B 11/06

(54) **Verfahren und Vorrichtung zur berührungslosen Erfassung von Messobjekten**

(30) Priorität: 10.06.2002 DE 10225488
(71) Anmelder: Gesellschaft für Bild- und Signalverarbeitung mbH, 98693 Illmenau (DE)
(72) Erfinder: Rauer, Steffen, Dr., 98693 Ilmenau (DE); Jahn, Rainer, Dr., 98693 Ilmenau (DE); Kollhoff, Dietmar, Dipl.-Ing., 98716 Geraberg (DE)
(74) Vertreter: Liedtke, Klaus, Dr.

(57) **Zusammenfassung**

1. Verfahren und Vorrichtung zur berührungslosen Erfassung von Messobjekten
2.1 Der Erfindung liegt die Aufgabe zugrunde, ein Verfahren und eine Vorrichtung der eingangs genannten Art anzugeben, die mit geringem Aufwand eine genaue Messung ermöglicht.
2.2 Erfindungsgemäß gelingt die Lösung der Aufgabe dadurch, dass das Messobjekt mit einem zweidimensionalen, mehrteiligen Muster beleuchtet wird und dessen Spiegelungen auf dem Sensor abgebildet werden und die Bestimmung der Parameter aus den Abbildungen virtueller Bilder erfolgt und dass das Messobjekt auf einem Transportband an den Messsystemen vorbeigeführt werden.
2.3 Die Erfindung betrifft ein Verfahren und eine Vorrichtung zur berührungslosen Erfassung von Messobjekten, insbesondere von transparenten Messobjekten, bei dem ein leuchtendes Muster an der Oberfläche des Messobjektes abgebildet und nach der Spiegelung mit Hilfe einer Optik auf einem ortsauflösenden Sensor abgebildet wird.

## Beschreibung

Die Erfindung betrifft ein Verfahren und eine Vorrichtung zur berührungslosen Erfassung von Messobjekten, insbesondere von transparenten Messobjekten, bei dem ein leuchtendes Muster an der Oberfläche des Messobjektes abgebildet und nach der Spiegelung mit Hilfe einer Optik auf einem ortsauflösenden Sensor abgebildet wird.

Nach DE 198 37 551 A1 und DE 198 05 200 A2 ist es zur Messung der Dicke von transparentem Material bekannt, eine linienförmigen Laserlichtquelle auf die Oberfläche des transparenten Materials zu projizieren und die Reflexionen an der Ober- und Unterseite (Doppelreflexverfahren) mit Hilfe einer Optik auf einen Zeilensensor abzubilden .
Nachteilig ist dabei, dass infolge Speckling des Lasers unscharfe und nicht geschlossene oder variable Konturen entstehen. Infolge der Streuung des Lichtes auf der Materialoberfläche ist die Reflexion an den Rändern diffus und damit unscharf. Nachteilig ist dabei auch, dass bei Verwendung eines Lasers Laserschutzklassen eingehalten werden müssen. Das Licht muss mit Hilfe von Sammellinsen aus der Reflexionsebene erfasst und auf den Zeilensensor gelenkt werden, da sonst bei Verschiebung des Messobjektes (z.B. bei einem Glasrohr) gegenüber dem Sensor das Messsignal nicht mehr auf diesen trifft.

Das optische Abbildungsverfahren ist endozentrisch, d.h. bei Änderung des Abstandes Messobjekt - Sensor ändert sich der Abbildungsmaßstab. Zur Verringerung des dadurch verursachten Messfehlers misst man deshalb den Abstand zwischen Messobjekt und Sensor mit einem zweiten Messsystem und korrigiert den Abbildungsmaßstab. Dies erfordert eine sehr aufwendige Messanordnung. Für die Messung geringer Materialdicken im Bereich zwischen 0,05 und 1 mm ist das beschriebene Messverfahren aufgrund der Eigenschaften der Laserreflexionen nicht einsetzbar.

In der Regel sind die beiden, den zu messenden Abstand bestimmenden Grenzflächen nicht parallel. Das bedeutet, dass man zwei unterschiedliche Messwerte erhält, wenn man die Dicke an derselben Stelle von gegenüberliegenden Seiten aus misst, da sich der Betrachtungswinkel ändert. Zur Lösung diese Problems wird in WO 99/56076 vorgeschlagen, zwei gegenläufige Anordnungen zu verwenden, die die selbe optische Achse nutzen, und die beiden Messwerte mitteln. Auch dieses Verfahren ist sehr aufwendig, da viele optisch hochwertige Bauteile benötigt werden, um den Strahlengang zu formen. Es werden zwei Kameras und zwei Lichtquellen benötigt, wobei diese beiden Anordnungen symmetrisch sein und genau justiert werden müssen. Die Mittelwertbildung ergibt auch nur sehr ungenaue Ergebnisse.

In verschiedenen Schriften, beispielsweise in DE 199 42 244 A1, werden Videokameras oder CCD-Kameras als Sensoren vorgeschlagen. Nachteilig ist hierbei neben der kostenintensiven Kameratechnik die aufwendige Ansteuerung.

Der Erfindung liegt die Aufgabe zugrunde, ein Verfahren und eine Vorrichtung der eingangs genannten Art anzugeben, die mit geringem Aufwand eine genaue Messung ermöglicht.

Die Aufgabe wird erfindungsgemäß mit einem Verfahren, welches die im Anspruch 1 angegebenen Merkmale aufweist, und mit einer Vorrichtung, welche die in Anspruch 13 angegebenen Merkmale aufweist, gelöst.

Vorteilhafte Ausgestaltungen sind in den Unteransprüchen angegeben.

Mit dem erfindungsgemäßen Verfahren wird ein zweidimensionales Muster mit Hilfe einer telezentrischen Lichtquelle auf die Oberfläche projiziert, welches an der oberen und unteren Grenzfläche des Messobjektes gespiegelt wird. Der Sensor betrachtet die virtuellen Bilder des Musters. Vorteilhaft ist dabei, dass diese Bilder scharf konturiert und gleichmäßig sind. Sie spiegeln das Aussehen des Musters wider, d.h. die Kamera erfasst gleichbleibende Muster; so dass die Anordnung ein auswertbares Messsignal auch bei sich ändernden Oberflächeneigenschaften des Prüflings gewährleistet. Die Anordnung gestattet aufgrund der scharfen Konturierung der Spiegelungen die Messung dünner transparenter Objekte bis zu einer minimalen Materialdicke von 0,05 mm.

Der zweidimensionale, ortsauflösende Sensor beobachtet die Spiegelbilder mit einem telezentrischen Objektiv, innerhalb dessen Telezentriebereiches der Abbildungsmaßstab konstant ist, so dass das Messobjekt im Bereich von mehreren Millimetern seine Dicke und seinen Abstand zum Sensor ändern kann, ohne dass dadurch Messfehler verursacht werden. Durch die Verwendung eines zweidimensionalen, ortsauflösenden Sensors ist es zulässig, dass sich nicht nur der Arbeitsabstand, sondern auch die seitliche Lage des Messobjektes, z.B. eines Rohres, zum Sensor ändert.
Mit der erfindungsgemäßen Anordnung wird ein zweidimensionales Muster auf den Prüfling projiziert. Da sich die Abstände der Spiegelungen an Oberund Unterseite örtlich, entsprechend der Dicke des Messobjektes ändern, kann die Gestalt des Querschnittes (Winkel der Grenzflächen zueinander) mathematisch rekonstruiert werden. Mittels einer iterativen Rechenvorschrift lässt sich die Materialdicke sehr genau bestimmen. Der apparative Aufwand für die erfindungsgemäße Anordnung ist sehr gering, da lediglich eine Beleuchtungseinrichtung und ein Sensor benötigt werden.

Eine vorteilhafte Ausgestaltung sieht vor, mit einem dreidimensionalen Messsystems die geometrische Form des Messobjektes sowie den Abstand zu einem Bezugspunkt zu ermitteln. Beispielsweise kann damit das Höhenprofil der Oberfläche des Messobjektes erfasst werden. Für das dreidimensionale Messsystem können beliebige Verfahren zur ortsauflösenden Entfernungsmessung, wie Laserscanner, Ultraschallscanner, Nahbereichsradar, Photomischdetektoren (PMD) oder optische Verfahren eingesetzt werden.

Ferner ist es möglich, die Textur der Oberfläche des Messobjektes mit einer oder mehreren flächigen Farbkameras zu erfassen.

Eine weitere vorteilhafte Ausgestaltung sieht vor, zur Trennung zwischen Messobjekt und dessen Hintergrund ein Hintergrundmodell in einer Recheneinheit zu generieren, welches aus den Bilddaten permanent aktualisiert wird.

Die Bilder aller Kameras können in einer digitalen Recheneinheit fusioniert werden, indem die erfassten zweidimensionalen Bilder der Oberflächen auf die dreidimensionale Form des Messobjektes projiziert werden.

Besonders vorteilhaft ist, dass die sonst übliche Kennzeichnung prägnanter Messpunkte in den Einzelbildern zwecks späterer Zusammensetzung der Einzelbilder und das damit verbundene Anbringen von erkennbaren Marken am Messobjekt nicht erforderlich sind. Diese derzeit notwendigen Maßnahmen stören das Design des Messobjektes. Ordnet man die Messobjekte manuell zu, da eine Kennzeichnung stört, ist der Prüfprozess nicht automatisierbar.

Vorteilhaft ist ferner, dass die sonst übliche geometrische Eichung des Messraumes nicht erforderlich ist. Dies ist insbesondere deshalb wichtig, weil bei fehlenden Abstandsinformationen des Messsystems zum Prüfling, eine Nachführung des Abbildungsmaßstabes bei Abstandsänderungen nicht möglich ist oder teure telezentrische Objektive eingesetzt werden müssen. Hinzu kommt, dass der Abbildungsmaßstab zwar innerhalb des Telezentriebereiches konstant bleibt, der Telezentriebereich aber oft zu klein ist.
Die Erfindung ermöglicht es, in einfacher Weise Informationen zur Keilförmigkeit, z.B. eines Glasrohres, bzw. zur Gestalt der Prüflingsoberfläche zu erhalten, so dass das sonst erforderliche aufwendige Eliminieren von Messfehler mit aufwendigen Musterprojektionen und Korrekturrechnungen entfallen.
Es können auch Informationen zur Winkellage der Prüflingsoberfläche zur Kameraebene ermittelt werden, die eine Korrektur des Beleuchtungs- und Betrachtungswinkels ermöglichen.
Außerdem sind auf dreidimensionalen Messobjekten vorhandene Texturen (Bilder, Logos, Schrift, u.a.) aufgrund der entzerrten Darstellung im Bild erkennbar.
Die mit Kamerasystemen betrachtete Objekte befinden sich immer vor einem Hintergrund, oft ist dies ein Förderband oder Transportsystem, welches die Messobjekte bewegt, oft ist es aber auch eine allgemeine Umgebungsszenerie (Werkhalle, andere Maschine). Infolge von Verschmutzungen (Förderband) oder Umgebungslicht (Halle) oder anderen bewegten Objekten (Maschinen) ändert sich der Hintergrund, so dass bei der Auswertung zu beurteilen ist, was zum Vordergrund (Messobjekt) und was zum Hintergrund (Umgebungsszenerie) gehört. Dabei ist es häufig nicht möglich, einen Bildbereich zu definieren, in dem sich die Messobjekte befinden, da diese an unterschiedlichen Positionen im Bild auftauchen oder unterschiedliche Größen haben, was insbesondere bei Schüttgütern oder der Sortierung von verschiedenen Objekten der Fall ist. Es ist deshalb ein wertvoller Vorzug des erfindungsgemäßen Verfahrens, dass dies vom Messsystem automatisch beurteilt werden kann.

Die Erfindung wird im Folgenden anhand eines Ausführungsbeispieles näher erläutert.

In der zugehörigen Zeichnung zeigen:
- Figur 1: eine schematische Darstellung der Anordnung,
- Figur 2: den Strahlengang der Messeinrichtung,
- Figur 3: eine Anordnung mit einem zwei- und einem dreidimensionalem Messsystem,
- Figur 4: eine Anordnung mit einem dreidimensionalen Messsystem und zwei zweidimensionalen Messsystemen
und
- Figur 5: eine Anordnung mit einem dreidimensionalen Messsystem und mehreren zweidimensionalen Messsystemen.

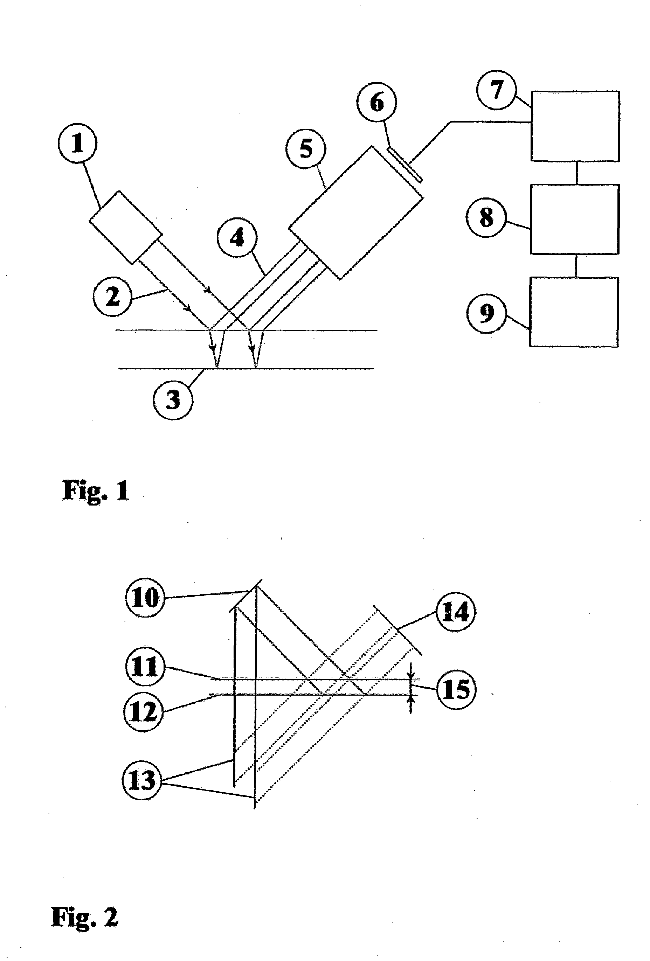

Wie aus der **Figur 1** ersichtlich ist, erfolgt durch den Einsatz einer Lichtquelle 1 die Projektion eines zweidimensionalen, zweiteiligen Musters, 2.1 und 2.2, auf die Oberfläche des Messobjektes 3, das mit dem zweidimensionalen, lichtempfindlichen Sensor 6 erfasst wird. Das bekannte Muster kann auch beim Ausfall von Teilabschnitten bei der Spiegelung am Messobjekt mit der dem Sensor 6 nachgeordneten digitalen Recheneinheit 7 erkannt und wieder hergestellt werden.

Als Lichtquelle dient eine telezentrische Lichtquelle 1. Diese sendet ein paralleles Strahlenbündel aus. Damit wird erreicht, dass das projizierte Muster nicht auf die Oberseite des Messobjektes fokussiert werden muss, d.h. das Messobjekt muss sich nicht in der Brennebene der der Lichtquelle vorgeordneten Optik befinden. Das Messobjekt kann seine Lage bezüglich des Messgerätes, im Rahmen des Messbereiches des zweidimensionalen Sensors, der im dargestellten Beispiel eine Kamera ist, ändern. Die Abbildung des projizierten Musters auf dem Sensor erfolgt mit einem telezentrischen Objektiv 4.

**Figur 2** erläutert die optischen Verhältnisse. Es wird nicht die Oberfläche des Messobjektes abgebildet (diffuse Reflexionen), sondern es erfolgt eine Abbildung der gespiegelten, virtuellen Abbilder der Muster 13. Die Projektionsebene 10 wird an der Messobjektoberfläche 11 gespiegelt. Die Spiegelung der Projektionsebene 10 an der unteren optischen Grenzfläche 12 erfolgt nach der Gesetzmäßigkeit, dass der Abstand der optischen Grenzflächen gleich der so genannten reduzierten Glasdicke 16 ist. Die reduzierte Glasdicke hängt vom Einfallswinkel ab und beträgt etwa Materialdicke dividiert durch Brechzahl. Die Bildebene 14 ist auf das virtuelle Bild der Muster 13 fokussiert. Der Einsatz der telezentrischen Optik ermöglicht eine parallele Abbildung und damit die maßstabsgerechte Abbildung auch bei sich ändernder Materialdicke oder variablem Arbeitsabstand. Damit ist es möglich, dass sich der Arbeitsabstand Messgerät - Messobjektoberseite sowohl aus der Sicht der Beleuchtung, als auch aus der Sicht der Kamera ändern darf.

Die Erfindung gestattet auch die Erfassung nichtparalleler Objektflächen, indem ein aus mehreren geometrischen Formen bestehendes Muster 2 projiziert wird. Bei Rohren oder rotationssymmetrischen, transparenten Behältern erfolgt die Projektion in Längsrichtung des Rohres bzw. in Richtung der Rotationsachse des Behälters. Mit dem zweidimensionalen Sensor 6 werden die Muster erfasst. Aus den Abständen der Einzelprojektionen kann die geometrische Form, d.h. die Winkellage der Grenzflächen zueinander, des zu messenden Materials rekonstruiert werden. Sind die Winkel bekannt, kann eine iterative Korrekturrechnung für die Materialdicke durchgeführt werden. Diese wird in einer digitalen Recheneinheit 7 oder einem Signalprozessor mit einem die Messaufgabe lösenden Rechenprogramm 8 realisiert, so dass die Dicke anschließend in einer Anzeigeeinheit 9 dargestellt werden kann.

Für kleine Materialdicken, bei denen Musterprojektionen mit Strichstärken im Bereich 0,01 mm notwendig sind, werden Lichtquellen mit Wellenlängen im Bereich 500 nm und kleiner verwendet.

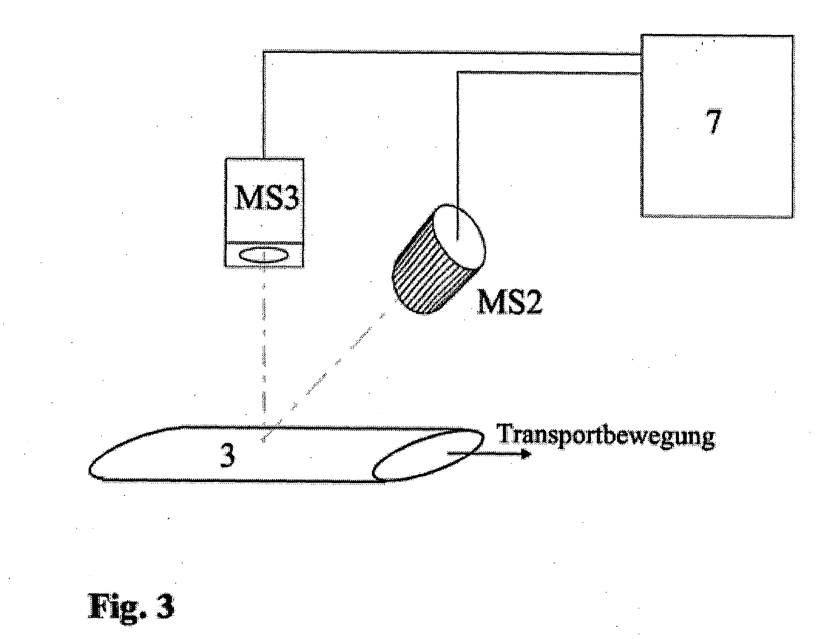

In **Figur 3** ist eine zusätzliche Anordnung dargestellt, die ein dreidimensionales, ortsauflösendes Messsystem MS3 und ein zweidimensionales, lichtempfindliches Messsystem MS2 enthält. Als zweidimensionales Messsystem MS2 wird eine Kamera verwendet. Mit dem dreidimensionalen Messsystem wird das Problem der fehlenden räumlichen Information gelöst. Dieses liefert neben dem Abstand zum Messobjekt 3 auch das Höhenprofil der Prüflingsoberfläche und deren Lage bzgl. des dreidimensionalen Messsystems. Das verwendete dreidimensionale Messsystem kann vorteilhaft eine 3D-Kamera auf Basis von PMD-Sensoren sein. Die zwei- und dreidimensionalen Messsysteme MS2 und MS3 können in beliebiger Anordnung zueinander positioniert sein.
Eine derartige Anordnung ist gut geeignet zur Erfassung von Endloserzeugnissen, beispielsweise von Profilmaterial und extrudierten Produkten.

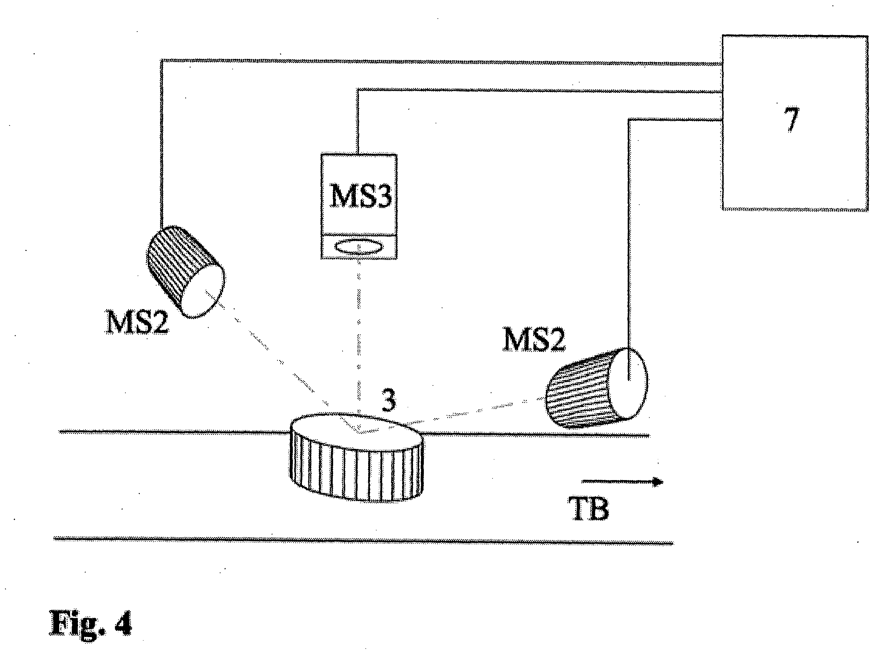

Die in **Figur 4** dargestellte Ausführungsform verfügt über ein dreidimensionales Messsystem MS3 und zwei zweidimensionale Messsysteme MS2. Durch die Anordnung von flächigen Farbkameras als zweidimensionale Messsysteme MS2 gelingt es, Information zur Textur, d.h. dem Aussehen der Oberfläche des Objektes, zu erfassen.
Damit können z.B. Schüttgüter, regelmäßige oder symmetrische Einzelobjekte und dergleichen erfasst werden. Die Anordnung ermöglicht auch eine Volumenbestimmung von dosierten Medien.

Die zweidimensionalen Messsysteme MS2 werden unter einem Winkel zur Auflagefläche rings um das Messobjekt 3 angeordnet. Die Anzahl der Kameras richtet sich nach der Kompliziertheit der Form des Prüflings.

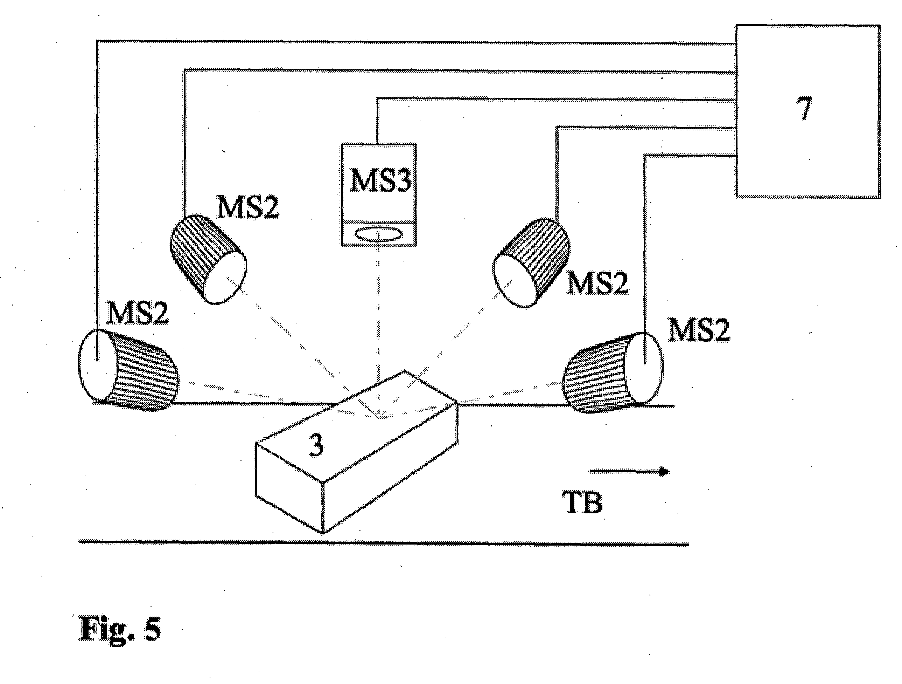

**Figur 5** zeigt eine Anordnung mit mehreren Kameras. Mit dieser Anordnung können beliebig geformte Einzelobjekte, insbesondere auch Behältergläser, erfasst werden. Die Anordnung ermöglicht auch eine Trennung der Bilddaten zwischen dem Messobjekt 3 im Vordergrund und dessen Hintergrund. Dies wird durch Generieren eines Hintergrundmodells ermöglicht, welches aus den Bilddaten permanent aktualisiert wird. Damit existiert in der Recheneinheit 7 ein zeitnahes Modell des Hintergrundes (z.B. der Oberfläche eines Transportbandes TB, auf dem die Messobjekte transportiert werden) ohne Objekte. Schnelle Änderungen im Bildinhalt, die von diesem Modell abweichen, werden als Messobjekte auf dem Transportband TB betrachtet. Das Hintergrundmodell berücksichtigt die Periodizität des eingesetzten Transportsystems. Langsame oder periodische Änderungen (beispielsweise Verschmutzungen) werden somit nach einer gewissen Zeit Bestandteil des Hintergrundes.

Die Bilder aller Kameras werden in der digitalen Recheneinheit 7 fusioniert, d.h. die erfassten zweidimensionalen Bilder der Oberflächen werden auf die dreidimensionale Form des Prüflings projiziert. Damit erlangt man exakte Informationen über die Verzerrung im zweidimensionalen Bild und kann die erfassten Oberflächen korrekt entzerren und so auf der Oberfläche enthaltene Informationen auswerten.

### BEZUGSZEICHENLISTE

- 1: Lichtquelle
- 2: zweidimensionales Muster
- 3: Messobjekt
- 4: telezentrischer Abbildungsstrahlengang
- 5: Objektiv
- 6: Sensor
- 7: digitale Recheneinheit
- 8: Rechenprogramm
- 9: Anzeigeeinheit
- 10: Projektionsebene
- 11: obere Grenzfläche des Messobjekts
- 12: untere Grenzfläche des Messobjekts
- 13: virtuelles Abbild des Musters
- 14: Bildebene
- 15: telezentrisches Objektiv
- 16: reduzierte Dicke

- MS3: dreidimensionales Messsystem
- MS2: zweidimensionales Messsystem
- TB: Transportband

## Patentansprüche

1. Verfahren zur berührungslosen Erfassung von Messobjekten (3), insbesondere von transparenten Messobjekten (3), bei dem ein leuchtendes Muster an der Oberfläche des Messobjektes (3) abgebildet wird und nach der Spiegelung mit Hilfe einer Optik (5) auf einem ortsauflösenden Sensor (6) abgebildet wird, **dadurch gekennzeichnet, dass** das Messobjekt (3) mit einem zweidimensionalen, mehrteiligen Muster (2) beleuchtet wird und dessen Spiegelungen auf dem Sensor (6) abgebildet werden und die Bestimmung der Parameter aus den Abbildungen virtueller Bilder erfolgt.

2. Verfahren nach Anspruch 1, **dadurch gekennzeichnet, dass** zur Dickenmessung von transparenten Messobjekten (3) die Spiegelungen an der Vorder- und an der Rückseite des transparenten Messobjektes (3) auf den Sensor (6) abgebildet werden und die Bestimmung der Dicke aus den zueinander versetzten Abbildungen zweier virtueller Bilder erfolgt.

3. Verfahren nach Anspruch 2, **dadurch gekennzeichnet, dass** die Abbildung der Spiegelungen des projizierten Musters (2) an der Vorder- und an der sich aus der reduzierten Dicke berechnenden Rückseite des Messobjektes (3) auf dem Sensor (6) erfolgt.

4. Verfahren nach Anspruch 2 oder 3, **dadurch gekennzeichnet, dass** das leuchtende Muster (2) mit einer Lichtquelle (1) mit telezentrischem Strahlengang erzeugt wird.

5. Verfahren nach einem der vorhergehenden Ansprüche, **dadurch gekennzeichnet, dass** die Abbildung des projizierten Musters (2) auf dem Sensor (6) mit telezentrischem Strahlengang erfolgt.

6. Verfahren nach einem der vorhergehenden Ansprüche, **dadurch gekennzeichnet, dass** das zweidimensionale Muster (2) aus mehreren geometrischen Figuren besteht.

7. Verfahren nach einem der vorhergehenden Ansprüche, **dadurch gekennzeichnet, dass** die Abbildung auf einem zweidimensionalen Sensor (6) erfolgt.

8. Verfahren nach einem der vorhergehenden Ansprüche, **dadurch gekennzeichnet, dass** die Auswertung des Messsignals mit einer digitalen Recheneinheit (7) oder einem digitalen Signalprozessor und einem die Messaufgabe erfüllenden Rechenprogramm erfolgt.

9. Verfahren nach einem der vorhergehenden Ansprüche, **dadurch gekennzeichnet, dass** mit Hilfe eines dreidimensionalen Messsystems (MS3) der Abstand des Messobjektes (3) zu einem Bezugspunkt und das Höhenprofil der Oberfläche des Messobjektes (3) sowie deren Lage bzgl. des Bezugspunktes erfasst wird.

10. Verfahren nach Anspruch 9, **dadurch gekennzeichnet, dass** die Textur der Oberfläche des Messobjektes (3) mit mindestens einer flächigen Farbkamera (MS2) erfasst wird.

11. Verfahren nach Anspruch 9 oder 10, **dadurch gekennzeichnet, dass** zur Trennung zwischen Messobjekt (3) und dessen Hintergrund ein Hintergrundmodell generiert wird, welches aus den Bilddaten permanent aktualisiert wird, wobei schnelle Änderungen des Bildinhaltes, die von diesem Modell abweichen, als Messobjekte (3) erkannt werden.

12. Verfahren nach einem der Ansprüche 9 bis 11, **dadurch gekennzeichnet, dass** die Bilder aller Kameras in der digitalen Recheneinheit (7) fusioniert werden, indem die erfassten zweidimensionalen Bilder der Oberflächen auf die dreidimensionale Form des Messobjektes (3) projiziert werden.

13. Verfahren nach einem der vorhergehenden Ansprüche, **dadurch gekennzeichnet, dass** das Messobjekt (3) auf einem Transportband (TB) an den Messsystemen (MS2, MS3) vorbeigeführt werden.

14. Vorrichtung zur Durchführung des Verfahrens nach einem der vorhergehenden Ansprüche, bei der ein leuchtendes Muster (2) an der Oberfläche des transparenten Objektes (3) abgebildet wird und nach der Spiegelung an dessen Ober- und Unterseite mit Hilfe einer Optik auf einem ortsauflösenden Sensor (6) abgebildet wird, **dadurch gekennzeichnet, dass** die Vorrichtung eine telezentrische Lichtquelle (1) zur Erzeugung eines zweidimensionalen Musters (2), eine abbildende Optik (5) mit telezentrischem Strahlengang, einen zweidimensionalen, ortsauflösenden Sensor (6), sowie eine digitale Recheneinheit (7) oder einen Signalprozessor enthält.

15. Vorrichtung nach Anspruch 14, **dadurch gekennzeichnet, dass** die telezentrische Lichtquelle Licht einer Wellenlänge kleiner 500 nm ausstrahlt.

16. Vorrichtung nach Anspruch 14 oder 15, **dadurch gekennzeichnet, dass** die Vorrichtung zusätzlich ein ortsauflösendes dreidimensionales Messsystem (MS3) enthält.

17. Vorrichtung nach einem der Ansprüche 14 bis 16, **dadurch gekennzeichnet, dass** als dreidimensionales Messsystem eine 3D-Kamera auf Basis von PMD-Sensoren verwendet wird.

18. Vorrichtung nach einem der Ansprüche 14 bis 17, **dadurch gekennzeichnet, dass** das ortsauflösende dreidimensionale Messsystem über dem Prüfling angeordnet ist und rings um das Messobjekt (3) zweidimensionale Messsysteme (MS2) unter einem Winkel zu dessen Auflagefläche angeordnet sind.
